# EUROPEAN PATENT SPECIFICATION

(11) **EP 1 231 736 B1**
(45) Date of publication and mention of the grant of the patent: **28.06.2006**
(21) Application number: 01309845.4
(22) Date of filing: 22.11.2001
(51) Int. Cl.: H04L 1/18

(54) **Wireless data communication**
Drahtlose Datenübertragung
Communication de données sans fil

(30) Priority: 09.02.2001 KR 2001006519
(43) Date of publication of application: 14.08.2002
(60) Divisional application: 05112972.4
(73) Proprietor: SAMSUNG ELECTRONICS CO., LTD., Suwon-si, Gyeonggi-do 442-742 (KR)
(72) Inventor: Park, Jae-han N/W Con. Team West, 2 Floor, RS, Giheung-eup, Yongin-city, Gyunggi-do (KR)
(74) Representative: Geary, Stuart Lloyd

(56) References cited:
- WO-A-99/09698
- US-A- 5 301 274
- "Bluetooth Specification Version 1.0 A Baseband Specification. 10.4 OVERVIEW OF STATES" , BLUETOOTH SPECIFICATION VERSION, XX, XX, PAGE(S) 98-122 XP002227783 * page 101 - page 107 *
- KALIA ET AL: "Scatternet structure and Inter-Piconet communication in the Bluetooth System" IEEE NCC, XX, XX, 2000, pages 1-4, XP000863816
- PATTERSON, DAVID AND HENNESSY, JOHN: "Computer Organisation and Design - The Hardware Software Interface" 1998 , MORGAN KAUFMANN PUBLISHERS, INC. , SAN FRANCISCO, CA, USA XP002236603 ISBN: 1-55860-428-6 * page 676 - page 682 *
- FLIK T.; LIEBIG H.: 'Mikroprozessortechnik', 1994, SPRINGER-VERLAG, BERLIN pages 275 - 285 * page 275 - page 285 *

## Description

The present invention relates to a method of wirelessly transmitting a data packet as in the pre-characterising part of claim 1, and corresponding apparatus.

Bluetooth is a recently developed standard for wireless communication over ranges of 10m to 100m with speeds of up to 1Mbps.

The Bluetooth system uses the ISM (Industrial Scientific Medical) band at 2.4GHz.

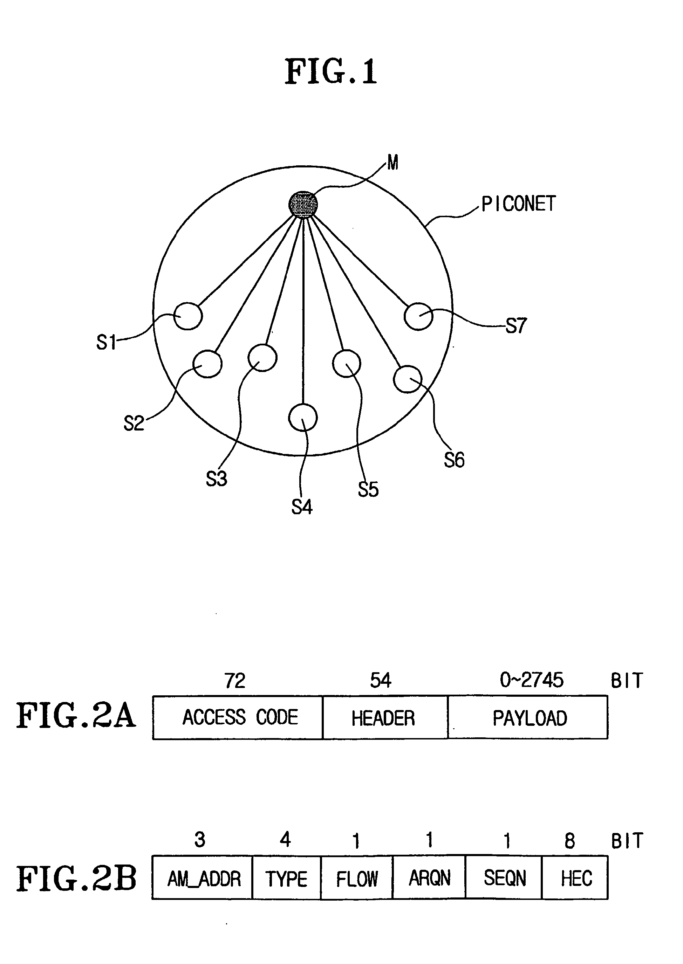

Figure 1 shows the structure of a Bluetooth piconet.

Referring to Figure 1, in a Bluetooth communication system, a piconet is formed such that a plurality of slave devices (S₁ - S₇) are connected to a master device (M). At most, seven slave devices (S₁ - S₇) can be connected to the master device (M) in an active mode in one piconet. In the piconet, the master device (M) and the slave devices (S₁ - S₇) communicate using packets.

Figure 2A shows the structure of the packets transmitted in the piconet shown in Figure 1. Figure 2B shows the header of the packet in more detail.

Referring to Figure 2B, a packet header has a total of 18 bits consisiting of AM_ADDR, TYPE, FLOW, ARQN, SEQN and HEC fields.

ARQN consists of 1 bit and is an acknowledgement indicator, used for notifying a source of a successful transmission without CRC (Cyclic Redundancy Check) errors.

A response message having acknowledge information takes one of two forms: positive acknowledgement (ACK) and negative acknowledgement (NAK). The ACK is sent by setting ARQN to 1 and the NAK is sent by setting ARQN to 0.

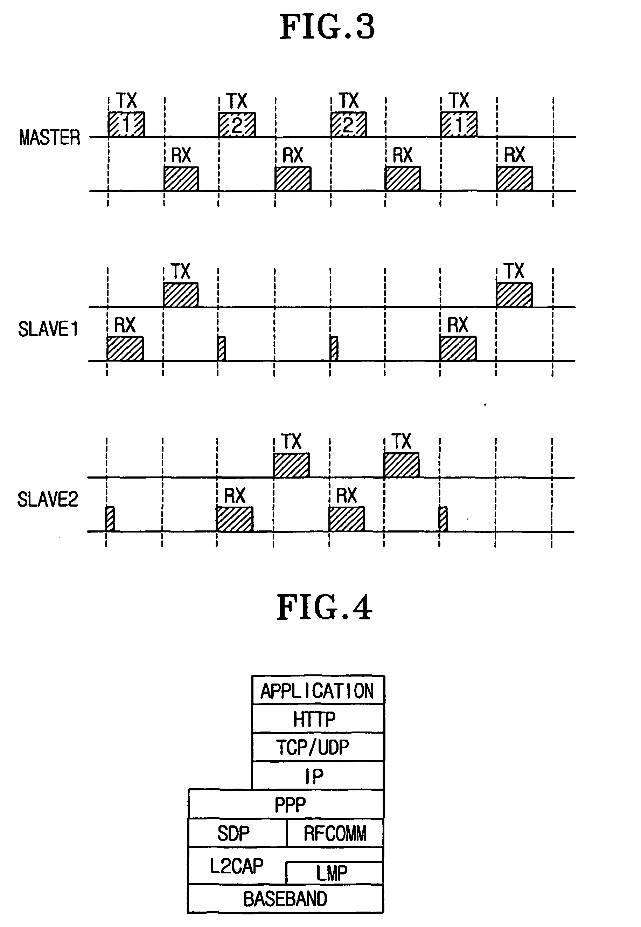

Moreover, in Bluetooth communication, the master device and the slave devices perform bi-directional communication by a TDD (Time Division Duplex) method as shown in Figure 3. The master device designates and transmits data to a target slave device in a Tx slot. In Figure 3, the 1s and 2s in the Tx slots of the master indicate that they are for slave 1 and slave 2 respectively. The slave devices receive data from the master in the corresponding Rx slots of their own timebases.

Figure 4 illustrates the Bluetooth protocol stack.

LMP (Link Manager Protocol) layer establishes a link between a source wireless communication apparatus and a destination wireless communication apparatus, and manages security and control thereof. The LMP layer builds a packet containing a response message to a request-to-send message.

After sending a request-to-send message, the source wireless communication apparatus must receive a response message from the destination wireless communication apparatus within a predetermined time, in other words within an LMP response time. Therefore, the source wireless communication apparatus confirms the acknowledgement information relating to the request message or whether the request message has been received by the destination wireless communication apparatus, then determines whether to re-send the request message or to perform the next operation according to the message flow.

On the other hand, in the LMP layer, when a piconet does not have a response message, the source wireless communication apparatus confirms whether the destination wireless communication apparatus received a signal, a baseband layer (refer to Figure 4) analyses acknowledge information included in the header of a Null packet, or an ARQN value included in the header is judged and acknowledgement information is offered to the LMP layer.

In addition, when sending request information, that is when sending more than two different data messages consecutively, after receiving request message data from another wireless communication apparatus, a wireless communication apparatus having a Bluetooth module processes the received null packet in the baseband after sending the first message and offers acknowledgement information to the LMP layer.

Then, the LMP layer determines whether to send a second message or to send the first message again, using the acknowledgement information received from the baseband layer.

As described above, if a request message is sent in a Bluetooth communication, it can be determined whether the request message has been sent successfully by the transmission of the acknowledgement information from the baseband layer to the LMP layer.

Therefore, it causes overload in the baseband layer, and there is increased signalling between the baseband layer and the LMP layer.

The present invention has been made to overcome the above-mentioned problems of the related art.

WO-A-99/09698 describes a transmission method wherein the data to be transmitted is written into a buffer. It is determined whether the data has been transmitted from the buffer by checking whether the buffer is empty.

A method according to the present invention is defined in claim 1 appended hereto.

Preferably, a method according to the present invention comprises setting a flag when said data is stored in the buffer and resetting the flag when said data is transferred from the buffer, and said data is determined to have been transmitted by checking the state of said flag at the end of said time interval.

Preferably, a method according to the present invention includes starting a timer operation in conjunction with the storing of said data in the buffer for establishing said interval.

Preferably, a method of transmitting a plurality of packets according to the present invention is defined in claim 4 appended hereto.

The present invention extends to an apparatus as defined in claims 6 to 10 and to a system as defined in claim 11.

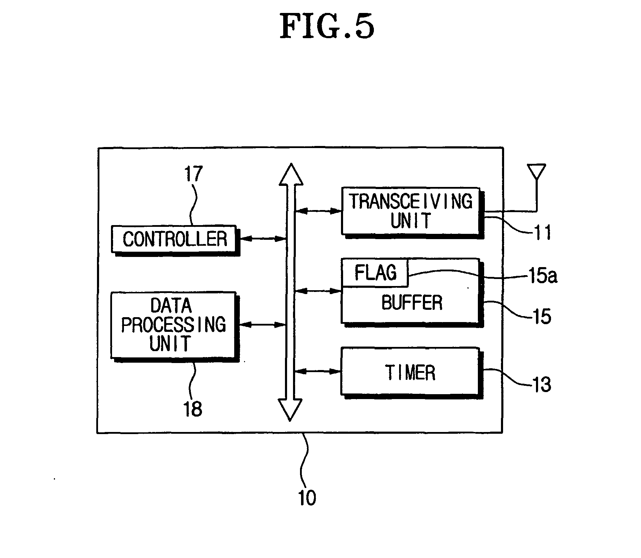

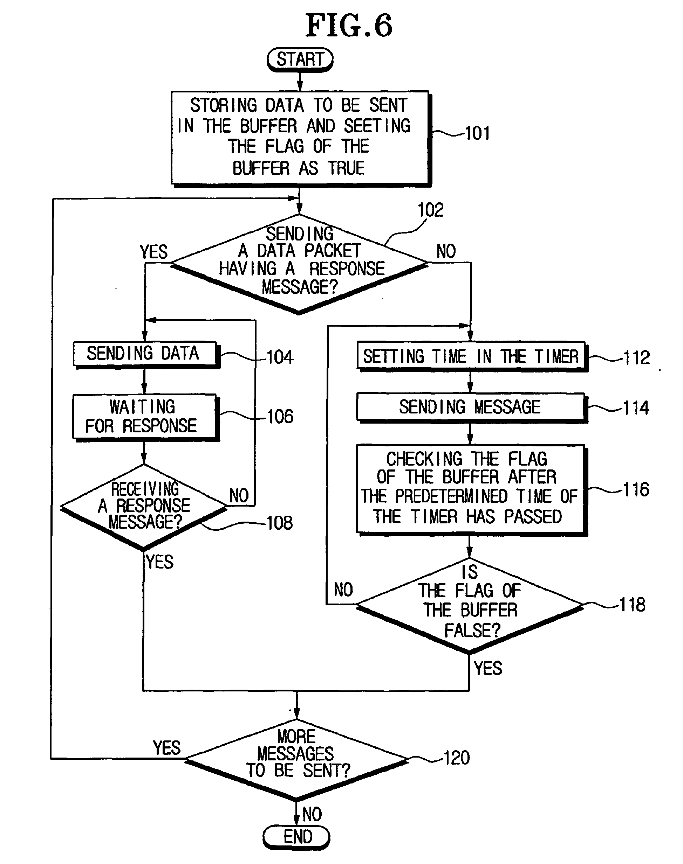

An embodiment of the present invention will now be described, by way of example, with reference to Figures 5 and 6 of the accompanying drawings, in which:-
Figure 1 shows the structure of a Bluetooth Piconet;
Figure 2A shows the structure of a packet transmitted in a Bluetooth piconet;
Figure 2B shows the header of the packet of Figure 2A in detail;
Figure 3 illustrates the transmission and reception time slots of components of a Bluetooth piconet;
Figure 4 shows the Bluetooth protocol stack;
Figure 5 is a block diagram of a wireless communication apparatus according to the present invention; and
Figure 6 is a flowchart illustrating a communication method according to the present invention.

Referring to Figure 5, a wireless communication apparatus 10 comprises a transceiving unit 11, a timer 13, a buffer 15, a controller 17 and a data processing unit 18.

The transceiving unit 11 processes received RF signals in the 2.4GHz band, and transmits packets as RF signals. The buffer 15 has a flag 15a and temporarily stores data intended to be sent by the transceiving unit 11. If there is data stored in the buffer 15, the flag 15a is set to true (flag = true), and if there is no data stored in the buffer 15, then the flag 15a is set to false (flag = false). The wireless communication apparatus can confirm that the has been sent correctly by checking the flag 15a.

The timer 13 determines the timing of the checking of whether data has been sent successfully. The time for checking whether the data has been sent successfully has to be less than the LMP response timeout (30 seconds) or the supervision timeout (default 20 seconds, maximum 40.9 seconds).

The controller 17 implements the baseband layer of a protocol stack corresponding to that of the Bluetooth standard as shown in Figure 4, and communicates with a host connected via a HCI (Host Controller Interface) (not shown). The host can be any of various devices that can operated as communication terminals such as laptop computers, cellular phones, and printers.

The data processing unit 18 implements a protocol stack layer corresponding to the LMP layer of the Bluetooth protocol stack as shown in Figure 4, and performs functions including controlling the transceiving unit 11, link control, controlling the logic channel, data whitening, address allocation and security. In addition, the data processing unit 18 confirms that data has been sent successfully by checking the flag 15a of the buffer 15 when transmitting data packets having no response message, and transmits request message data of its own after receiving request message data from another wireless communication apparatus, namely more than two different types of message data consecutively.

Here, if a transmission success checking time is set in the timer 13, the data processing unit 18 confirms the transmission of the data by checking the flag 15a of the buffer 15 when the time set in the timer 15 is exceeded. At that time, if the flag 15a indicates 'false', then it is determined that the data has been sent successfully.

The operation of the wireless communication apparatus will now be described with reference to Figure 6.

First, when the source wireless communication apparatus intends to transmit data, the wireless communication apparatus stores the data in the buffer 15 and sets the flag 15a of the buffer 15 as 'true' (step 101). Then, the wireless communication apparatus checks whether the data intended to be sent is a data packet having a response message (step 102).

When the data packet has a response message, the data is sent (step 104). Then, the wireless communication apparatus waits for the reception of a response message during the LMP layer response time. After that, the wireless communication apparatus checks for the reception of the response message (step 108), and if the response message has not been received, the data is re-sent.

After checking that the data has been transmitted successfully, the wireless communication apparatus again checks whether there is more data to be sent (step 120). If there is more data to be sent, the wireless communication apparatus returns to the step 102.

If there is no response message, such as when sending data having no response message or sending more than two different types of message consecutively, the waiting time for checking whether the data has been transmitted successfully is set in the timer 13 (step 112). Then, the data is read from the buffer 15 and sent in a Tx slot (step 114).

After the time, set in the timer 13, has been exceeded, the wireless communication apparatus checks the flag 15a of the buffer 15 (step 116). If the flag 15a of the buffer 15 indicates 'true,' it means that data is stored in the buffer 15. Thus it is confirmed that the data has not been sent to a destination wireless communication apparatus. Therefore, the wireless communication apparatus returns to step 112, sets the time in the timer 13, then repeats from step 114 to step 118. However, if the flag 15a of the buffer 15 indicates 'false,' it means that the data has been sent. Thus, the wireless communication apparatus confirms that the data has been successfully sent to the destination wireless communication apparatus.

After confirming the successful sending of data, the source wireless communication apparatus checks whether there is more data to be sent. If there is more data to be sent, the source wireless communication apparatus returns to step 102.

As is apparent from the foregoing, the successful transmission of data can be easily checked. In addition, the baseband processing load is decreased vis-à-vis the prior art and the signalling interface between the baseband and the LMP layers is reduced.

## Claims

1. A method of wirelessly transmitting a plurality of data packets, the method comprising, in an initiating apparatus:
storing first data in a buffer (15) and transmitting the data;
confirming that the first data comprises a message that requires a response message to a link management layer;
when it is confirmed that the first data comprises a message that requires a response message to a link management layer, then;
transferring said first data from the buffer (15) for transmission in a packet; and
determining whether said first data has been transmitted by waiting for a response thereto within a response window,
confirming that second data comprises a message that requires no response message to a link management layer;
when it is confirmed that the second data requires no response message to a link management layer, then;
storing the second data in the buffer (15);
setting a time interval;
transferring said second data from a buffer (15) for transmission in a packet; and
thereafter checking whether said buffer (15) is empty, to determine whether said second data has been transmitted.

2. A method according to claim 1 comprising setting a flag (15a) when said data is stored in the buffer (15) and resetting the flag (15a) when said data is transferred from the buffer (15), wherein said data is determined to have been transmitted by checking the state of said flag (15a) at the end of said time interval.

3. A method according to either one of claims 1 or 2, including starting a timer operation in conjunction with the storing of said data in the buffer (15) for establishing said interval.

4. A method according to claim 1, comprising, at a responsive apparatus:
receiving said first data;
transmitting a response, including an acknowledgement, in response to reception of said first data; and
receiving said second data,
wherein no response message is sent in response to reception of said second data.

5. A method according to any one of claims 1 to 4, wherein the data packet is transmitted using the Bluetooth (RTM) protocol.

6. A wireless communication apparatus comprising a buffer (15) and means (11, 13, 17) for performing each step of a method according to any preceding claim so as to transmit data from said buffer (15).

7. A wireless communication apparatus according to claim 6, comprising:
a transceiving unit (11) for transmitting data to and receiving data from an external apparatus; and
a controller 17,
wherein the buffer (15) has an indicator (15a) for indicating an existence of data in the buffer and the controller (17) is configured for checking the indicator (15a) of the buffer (15) with regard to the data being sent to a destination wireless communication apparatus via the transceiving unit (11) and confirming that the data has been sent to the destination wireless communication apparatus successfully by checking that there is no data in the buffer (15).

8. A wireless communication apparatus of claim 7, wherein the indicator is a flag (15a).

9. A wireless communication apparatus of claim 8, wherein the controller (11) is configured for checking said flag (15a) or waiting to receive acknowledgement information from the destination wireless communication apparatus in dependence on whether the a transmitted message requires a response to a link management layer or not.

10. A wireless communication apparatus of claim 7, 8 or 9, further comprising a timer (13) for setting a waiting time for checking whether data has been sent, wherein the controller (17) is configured to check said indicator (15a) when the timer times out.

11. A wireless communication system comprising a master apparatus and at least one slave apparatus, wherein the master is an apparatus according to any one of claims 6 to 10.

## Patentansprüche

1. Ein Verfahren zum drahtlosen Übertragen einer Vielzahl von Datenpaketen, das Verfahren umfassend, in einer initiierenden Vorrichtung:
Speichern erster Daten in einem Puffer (15) und Übertragen der Daten;
Bestätigen, dass die ersten Daten eine Nachricht umfassen, die eine Antwortnachricht zu einer Verknüpfungsmanagementschicht erfordert;
wenn bestätigt ist, dass die ersten Daten eine Nachricht umfassen, die eine Antwortnachricht zu einer Verknüpfungsmanagementschicht erfordert, dann:
Transferieren der ersten Daten von dem Puffer (15) für eine Übertragung in einem Paket; und
Bestimmen, ob die ersten Daten übertragen wurden, durch Warten auf eine Antwort darauf innerhalb eines Antwortfensters,
Bestätigen, dass zweite Daten eine Nachricht umfassen, die keine Antwortnachricht zu einer Verknüpfungsmanagementschicht erfordert;
wenn bestätigt ist, dass die zweiten Daten keine Antwortnachricht zu einer Verknüpfungsmanagementschicht erfordern, dann:
Speichern der zweiten Daten in dem Puffer (15);
Einstellen eines Zeitintervalls;
Transferieren der zweiten Daten von einem Puffer (15) für eine Übertragung in einem Paket; und
danach Prüfen, ob der Puffer (15) leer ist, um zu bestimmen, ob die zweiten Daten übertragen wurden.

2. Ein Verfahren nach Anspruch 1, umfassend Setzen eines Flags (15a), wenn die Daten in dem Puffer (15) gespeichert sind, und Rücksetzen des Flags (15a), wenn die Daten von dem Puffer (15) transferiert sind, wobei von den Daten bestimmt wird, dass sie erfolgreich übertragen wurden, durch Prüfen des Zustands des Flags (15a) in dem Ende des Zeitintervalls.

3. Ein Verfahren nach einem von beiden Ansprüchen 1 oder 2, enthaltend Starten einer Timeroperation in Verbindung mit dem Speichern der Daten in dem Puffer (15) zum Festsetzen des Intervalls.

4. Ein Verfahren nach Anspruch 1, umfassend, in einer reagierenden Vorrichtung:
Empfangen der ersten Daten;
Übertragen einer Antwort, einschließlich einer Bestätigung, als Reaktion auf Empfang der ersten Daten; und
Empfangen der zweiten Daten,
wobei keine Antwortnachricht als Reaktion auf den Empfang der zweiten Daten gesendet wird.

5. Ein Verfahren nach einem beliebigen von Ansprüchen 1 bis 4, wobei das Datenpaket unter Verwendung des Bluetooth-(RTM) Protokolls übertragen wird.

6. Eine drahtlose Kommunikationsvorrichtung, umfassend einen Puffer (15) und Mittel (11, 13, 17) zum Durchführen von jedem Schritt eines Verfahrens gemäß einem beliebigen vorangehenden Anspruch so, um Daten von dem Puffer (15) zu übertragen.

7. Eine drahtlose Kommunikationsvorrichtung nach Anspruch 6, umfassend:
eine übermittelnde Einheit (11) zum Übertragen von Daten zu und Empfangen von Daten von einer externen Vorrichtung; und
eine Steuervorrichtung 17,
wobei der Puffer (15) einen Indikator (15a) zum Anzeigen eines Vorhandenseins von Daten in dem Puffer hat, und die Steuervorrichtung (17) konfiguriert ist zum Prüfen des Indikators (15a) des Puffers (15) hinsichtlich der Daten, die zu einer drahtlosen Kommunikationsvorrichtung des Ziels über die übermittelnde Einheit (11) gesendet werden, und Bestätigen, dass die Daten zu der drahtlosen Kommunikationsvorrichtung des Ziels erfolgreich gesendet wurden durch Prüfen, dass es keine Daten in dem Puffer (15) gibt.

8. Eine drahtlose Kommunikationsvorrichtung nach Anspruch 7, wobei der Indikator ein Flag (15a) ist.

9. Eine drahtlose Kommunikationsvorrichtung nach Anspruch 8, wobei die Steuervorrichtung (11) konfiguriert ist zum Prüfen des Flags (15a) oder Warten, um Bestätigungsinformation von der drahtlosen Kommunikationsvorrichtung des Ziels zu empfangen in Abhängigkeit davon, ob die eine übertragene Nachricht eine Antwort zu einer Verknüpfungsmanagementschicht erfordert oder nicht.

10. Eine drahtlose Kommunikationsvorrichtung nach Anspruch 7, 8 oder 9, ferner umfassend einen Timer (13) zum Einstellen einer Wartezeit für eine Prüfung, ob Daten gesendet wurden, wobei die Steuervorrichtung (17) konfiguriert ist, den Indikator (15a) zu prüfen, wenn der Timer abläuft.

11. Ein drahtloses Kommunikationssystem, umfassend eine Mastervorrichtung und mindestens eine Slave-Vorrichtung, wobei der Master eine Vorrichtung gemäß einem beliebigen von Ansprüchen 6 bis 10 ist.

## Revendications

1. Procédé de transmission sans fil d'une pluralité de paquets de données, le procédé comprenant, dans un dispositif de lancement :
le stockage d'une première donnée dans un tampon (15) et la transmission de la donnée ;
la confirmation du fait que la première donnée comprend un message qui demande un message de réponse à une couche de gestion de lien ;
quand il est confirmé que la première donnée comprend un message qui demande un message de réponse à une couche de gestion de lien, alors ;
le transfert de ladite première donnée depuis le tampon (15) en vue d'une transmission dans un paquet ; et
la détermination du fait que, oui ou non, ladite première donnée a été transmise en attendant une réponse pour cette première donnée à l'intérieur d'une fenêtre de réponse,
la confirmation du fait qu'une seconde donnée comprend un message qui ne demande aucun message de réponse à une couche de gestion de lien ;
quand il est confirmé que la seconde donnée ne demande aucun message de réponse à une couche de gestion de lien, alors ;
le stockage de la seconde donnée dans le tampon (15) ;
la fixation d'un intervalle de temps ;
le transfert de ladite seconde donnée depuis un tampon (15) en vue d'une transmission dans un paquet ; et
la vérification ultérieure du fait que, oui ou non, ledit tampon (15) est vide, pour déterminer si, oui ou non, ladite seconde donnée a été transmise.

2. Procédé selon la revendication 1 comprenant l'activation d'un sémaphore (15a) quand ladite donnée est stockée dans le tampon (15) et la remise à zéro du sémaphore (15a) quand ladite donnée est transférée depuis le tampon (15), dans lequel on détermine que ladite donnée a été transmise en vérifiant l'état dudit sémaphore (15a) à la fin dudit intervalle de temps.

3. Procédé selon l'une ou l'autre des revendications 1 ou 2, comprenant le démarrage du fonctionnement d'un minuteur en conjonction avec le stockage de ladite donnée dans le tampon (15) pour l'établissement dudit intervalle.

4. Procédé selon la revendication 1, comprenant, au niveau d'un dispositif réceptif :
la réception de ladite première donnée ;
la transmission d'une réponse, comprenant un acquittement, en réponse à la réception de ladite première donnée ; et
la réception de ladite seconde donnée,
dans lequel aucun message de réponse n'est envoyé en réponse à la réception de ladite seconde donnée.

5. Procédé selon l'une quelconque des revendications 1 à 4 dans lequel le paquet de données est transmis en utilisant le protocole Bluetooth (RTM).

6. Dispositif de communication sans fil comprenant un tampon (15) et un moyen (11, 13, 17) pour effectuer chaque étape d'un procédé selon l'une quelconque des revendications précédentes de manière à transmettre des données depuis ledit tampon (15).

7. Dispositif de communication sans fil selon la revendication 6 comprenant :
une unité d'émission/réception (11) destinée à transmettre des données à un et à recevoir des données d'un dispositif externe ; et
un dispositif de commande 17,
dans lequel le tampon (15) possède un indicateur (15a) destiné à indiquer l'existence de données dans le tampon et dans lequel le dispositif de commande (17) est configuré pour vérifier l'indicateur (15a) du tampon (15) en ce qui concerne l'envoi de la donnée à un dispositif de communication sans fil de destination par l'intermédiaire de l'unité d'émission/réception (11) et à confirmer le fait que la donnée a été envoyée au dispositif de communication sans fil de destination avec succès en vérifiant qu'il n'y a pas de données dans le tampon (15).

8. Dispositif de communication sans fil selon la revendication 7 dans lequel l'indicateur est un sémaphore (15a).

9. Dispositif de communication sans fil selon la revendication 8 dans lequel le dispositif de commande (11) est configuré pour vérifier ledit sémaphore (15a) ou pour attendre de recevoir une information d'acquittement en provenance du dispositif de communication sans fil de destination suivant que le message transmis demande une réponse à une couche de gestion de lien ou non.

10. Dispositif de communication sans fil selon la revendication 7, 8 ou 9, comprenant de plus un minuteur (13) pour fixer un temps d'attente pour la vérification du fait que, oui ou non, la donnée a été envoyée, dans lequel le dispositif de commande (17) est configuré pour vérifier ledit indicateur (15a) quand le minuteur arrive au bout de son décomptage de temps.

11. Système de communication sans fil comprenant un dispositif maître et au moins un dispositif esclave, dans lequel le maître est un dispositif selon l'une quelconque des revendications 6 à 10.
